# EUROPEAN PATENT APPLICATION

(11) **EP 1 333 646 A1**
(43) Date of publication of application: **06.08.2003**
(21) Application number: 02075363.8
(22) Date of filing: 30.01.2002
(51) Int. Cl.: H04L 29/08

(54) **Access provider and server for offering an internet portal having a menu**

(71) Applicant: Koninklijke KPN N.V., 9726 AE Groningen (NL)
(72) Inventor: van Hulten, Christian, 2628 AW Delft (NL); Zom, Pablo, 3014 DC Rotterdam (NL)
(74) Representative: Wuyts, Koenraad Maria

(57) **Abstract**

Servers (7), for offering an internet portal comprising a main menu (100) comprising menu-items (110,120,130,140,150) to a mobile terminal (1), comprise transmitting modules (75) for transmitting portal signals comprising menu-item signals to said terminal and receiving modules (74) for receiving activation signals comprising menu-item codes from said terminal for activating menu-items, and can be made more user-friendly by adding to each menu-items at least two sub-menu-items (111-115,121-127,131-139,141-146,151-155), and by providing servers with generating modules (76) for generating sub-menu-item signals, which are personalized when added to a first menu-item and which are non-personalized when added to a second menu-item. With addressing modules (77) for addressing service providers, said mobile phone can be coupled to service providers, and with supplying modules (78) for supplying time-dependent information and adjusting modules (73) for allowing adjustment of user-dependent information, all only after further activation signals have been received, the main menu gives an even better overview resulting in a further increased user-friendlyness.

## Description

The invention relates to a server for offering an internet portal comprising a menu comprising menu-items to a mobile terminal.

Such a server is generally used by, inter alia, mobile network providers, with said network-unit for example being a switch, a router, a bridge, a base station etc.

US 6,199,077 discloses a portal server for offering a portal to subscribers using fixed terminals like personal computers coupled to the portal server via a Public Switched Telephony Network (PSTN) or an Integrated Services Digital Network (ISDN). This portal comprises a menu comprising menu-items like Search, Agent, Last, Update and Add, which menu-items, together with the rest of the portal, are being displayed on the terminal's display. Thereto, the portal signal comprising the menu-item signals is transmitted from the portal server to the fixed terminal, resulting in said portal together with said menu comprising said menu-items being displayed entirely or partly respectively dependently upon said display being large enough or not respectively. In response to the activation signal comprising the menu-item code originating from said fixed terminal, for example as a result of said subscriber having made a mouse click on said menu-item, this menu-item is activated, resulting in the start of a Search, the activation of an Agent which may be programmed to perform certain tasks such as obtaining account information, executing simple transactions, returning user-requested notification information about upcoming events, and so on etc.

The known server is disadvantageous, inter alia, due to offering an internet portal which is insufficiently user-friendly when visiting this portal via a mobile terminal, like for example a mobile phone, having a small(er) sized display.

It is an object of the invention, inter alia, of providing a server as defined in the preamble which can offer an internet portal to a mobile terminal, like for example a mobile phone having a small(er) sized display, in a more user-friendly way.

It is a further object of the invention to provide an access provider comprising a network-unit coupled to a server for offering an internet portal comprising a menu comprising menu-items to a mobile terminal, and to a method for offering an internet portal comprising a menu comprising menu-items to a mobile terminal, and to a processor program product to be run via a server for offering an internet portal comprising a menu comprising menu-items to a mobile terminal, and to a mobile phone for use in combination with such a server, and to a portal signal.

The server according to the invention for offering an internet portal comprising a menu comprising menu-items to a mobile terminal, with at least some of said menu-items each being linked to at least two sub-menu-items, for example comprises
- a transmitting module for transmitting a portal signal to said terminal, which portal signal for example comprises menu-item signals each for displaying at least a part of a menu-item on a display of said terminal, with said portal signal comprising said menu-item signals for example being stored in said server, and/or
- a receiving module for receiving an activation signal from said terminal for activating a menu-item, which activation signal for example comprises a menu-item code defining a menu-item, and/or
- a generating module for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items of said first menu-item for example being personalized, and with at least most of said sub-menu-items of said second menu-item for example being non-personalized.

By providing (linking) at least some of said menu-items each with (to) at least two sub-menu-items, whereby in response to a first (second) menu-item code originating from said mobile phone, sub-menu-item signals are generated and sent to said mobile phone, each for displaying at least a part of a sub-menu-item of a first (second) menu-item on said display, which sub-menu-items are being displayed either in addition to said first (second) menu-item (for example by pasting and/or with an overlap) or by replacing said first (second) menu-item, the internet portal is offered to the mobile phone in an overview-friendly way. By personalizing at least most of said sub-menu-items of said first menu-item (with said first menu-item for example dealing with personal services and for example being named "my services"), with at least most of said sub-menu-items of said second menu-item being non-personalized (with said second menu-item for example dealing with general services and for example being named "all services"), the overview-friendly internet portal has become very user-friendly, due to a user now being guided through the menu dependently upon the user's needs (the need for personalized services or non-personalized services), and getting a well-sorted overview.

The invention is based on the insight, inter alia, that known portals offered to personal computers cannot be offered to mobile phones, and is based upon the basic idea, inter alia, that when the two-dimensional surface is limited, one should go into the third dimension (sub-menus), in a clever way, by using basic distinguishments (like personalized items versus non-personalized items).

The invention solves the problem, inter alia, of providing a server as defined in the preamble which offers an internet portal to a mobile phone in a more user-friendly way.

A first embodiment of the server according to the invention is advantageous in that said server for example comprises
- an addressing module for addressing a service provider for coupling said mobile phone to said service provider (for example partly wirelessly and partly wiredly). Due to said service provider being contacted only after said further activation signal comprising a sub-menu-item code defining a sub-menu-item has been received from said mobile phone, the main menu comprising menu-items now gives a better overview resulting in an increased user-friendlyness, because of these menu-items just giving an overview and not allowing any contacting of service providers. The contacting of service providers is just possible in the sub-menu comprising sub-menu-items or in a subsub-menu comprising subsub-items etc., with said sub-menu being reachable from the main menu (via an activation signal comprising a menu-item code defining the first or second menu-item), with said subsub-menu being reachable from the sub-menu (via a further activation signal comprising a sub-menu-item code) etc.

A second embodiment of the server according to the invention is advantageous in that said server for example comprises
- a supplying module for supplying time-dependent information stored in said server from said server to said mobile phone.

Due to said time-dependent information being supplied only after said further activation signal comprising a sub-menu-item code defining a sub-menu-item of a third menu-item has been received from said mobile phone (with said third menu-item for example dealing with timely (daily/weekly/monthly) updatable news and for example being named "i-magazine"), the main menu comprising menu-items now gives a better overview resulting in an increased user-friendlyness, because of these menu-items just giving an overview and not allowing any supplying of time-dependent information. The supplying of time-dependent information is just possible in the sub-menu comprising sub-menu-items or in a subsub-menu comprising subsub-menu-items etc., with said sub-menu being reachable from the main menu (via an activation signal comprising a menu-item code defining the third menu-item), with said subsub-menu being reachable from the sub-menu (via a further activation signal comprising a sub-menu-item code) etc.

A third embodiment of the server according to the invention is advantageous in that said server for example comprises
- an adjusting module for allowing adjustment of user-dependent information stored in said server in dependence of a receival of an adjustment signal originating from said terminal.

Due to allowing adjustment of user-dependent information only after said further activation signal comprising a sub-menu-item code defining a sub-menu-item of a fourth menu-item has been received, from said mobile phone (with said fourth menu-item for example dealing with adjustable options and for example being named "options"), the main menu comprising menu-items now gives a better overview resulting in an increased user-friendlyness, because of these menu-items just giving an overview and not allowing any adjusting of user-dependent information. The adjusting of user-dependent information is just possible in the sub-menu comprising sub-menu-items or in a subsub-menu comprising subsub-menu-items etc., with said sub-menu being reachable from the main menu (via an activation signal comprising a menu-item code defining the fourth menu-item), with said subsub-menu being reachable from the sub-menu (via a further activation signal comprising a sub-menu-item code) etc.

A fourth embodiment of the server according to the invention is advantageous in that for example five menu-items offer time-dependent information, personalized services, non-personalized services, adjustment of user-dependent information and help, in this particular order on said display.

Embodiments of the access provider according to the invention, of the method according to the invention, of the processor program product according to the invention, of the mobile terminal according to the invention and of the portal signal according to the invention correspond with the embodiments of the server according to the invention.

In view of the above, it will be clear that further servers, further access providers, further methods, further processor program products, further (mobile or non-mobile) terminals and/or further portal signals can be defined using one or more of the above-described features and/or using further features disclosed in the summary, without departing from the scope of this invention.

These and other aspects of the invention will be apparent from and elucidated with reference to the embodiments(s) described hereinafter.
Figure 1 discloses an access provider according to the invention comprising server according to the invention, and
figure 2 discloses a main menu and first sub-menus for use in combination with a server according to the invention.

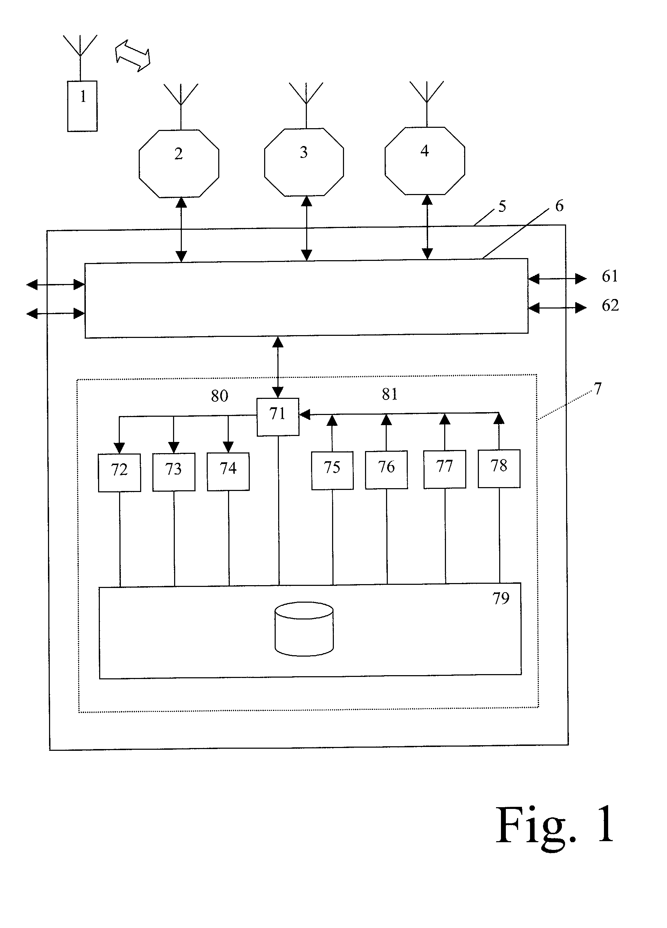

Figure 1 discloses a mobile phone 1 and three base stations 2,3,4 which are coupled to (more general: communicate with) an access provider 5 comprising a switch 6 and a server 7. Switch 6 is coupled to (more general: communicates with) each one of said base stations 2,3,4, to (with) server 7, to (with) service providers via couplings 61,62 and to (with) further networks via further couplings. Server 7 comprises an interface 71 of which an in/output is coupled to (more general: communicates with) switch 6 and of which an output is coupled to (more general: communicates with) a receiving bus 80 and of which an input is coupled to (more general: communicates with) a transmitting bus 81. A control input of interface 71 is coupled to (more general: communicates with) a processor/memory 79, which is further coupled to (more general: communicates with) control inputs of receiving module 74, adjusting module 73 and further module 72, of which the inputs are coupled to (more general: communicate with) receiving bus 80. Processor/memory 79 is further coupled to (more general: communicates with) control inputs of transmitting module 75, generating module 76, addressing module 77 and supplying module 78, of which the outputs are coupled to (more general: communicate with) transmitting bus 81.

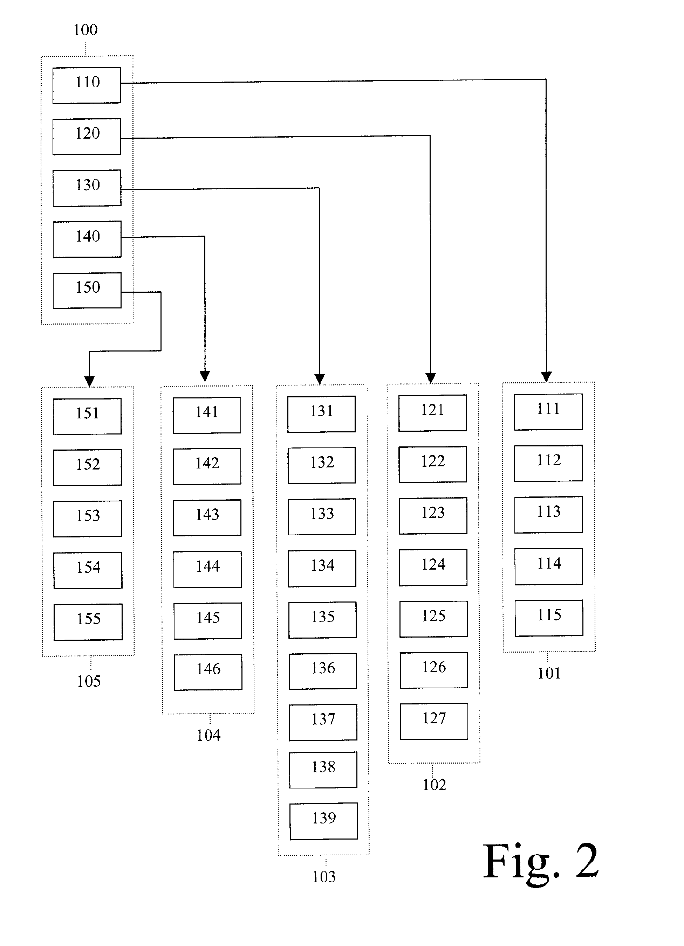

Figure 2 discloses a main menu 100 and sub-menus 101,102,103,104,105 for use in combination with a server 7 according to the invention. Main menu 100 comprises five menu-items 110,120,130,140,150 respectively, being a first, second, third, fourth and fifth menu-item respectively, each one giving access to (or being linked to) sub-menus 101,102,103,104,105 respectively which comprise sub-menu-items 111-115,121-127,131-139,141-146,151-155 respectively.

A user operating mobile phone 1 usually has two options for visiting the Internet: Said user can type a URL by using the mobile phone's keys or visit the provider's portal by selecting the portal-option from the mobile phone's menu, again by using the mobile phone's keys. After having selected the portal-option, a portal-code is transmitted from mobile phone 1 via for example base station 2 and switch 6 to server 7. Interface 71 supplies this portal-code to receiving bus 80, and via receiving module 74 said portal-code is supplied to processor/memory 79, all under control of this processor/memory 79, which detects this portal-code and in response supplies transmitting module 75 with a portal signal comprising menu-item signals, which portal signal, under control of processor/memory 79, via transmitting bus 81 and interface 71 is sent to switch 6, which transmits this portal-signal via base station 3 to mobile phone 1. As a result, said user can watch the portal comprising the main menu 100 including the five menu-items 110,120,130,140,150 on the display of the mobile phone 1, either entirely or partly (whereby either just some of said five menu-items 110,120,130,140,150 are shown on the display, or just parts of these five menu-items 110,120,130,140,150 are shown on the display, or a combination of both possibilities).

According to prior art, these menu-items for example correspond with Search, Agent, Last, Update and Add. In case of said user being interested in starting a Search or activating an Agent, said user must activate the corresponding menu-item, by using the mobile phone's keys, which results in the sending from said mobile phone 1 to said access provider 5 of an activation signal comprising a corresponding menu-item code defining the corresponding menu-item. This menu-item code is either an identification code identifying the corresponding menu-item, or is a location code defining the location of this corresponding menu-item and thereby indirectly also identifying the corresponding menu-item. This menu-item code is received in server 7, more particular by receiving module 74, which informs processor/memory 79. As a result, a Search is started, or an Agent is activated etc., with this start of the Search or the activiation of the Agent being shown on the mobile phone's display.

Due to displays of mobile phones being small(er) sized, and due to these prior art menu-items directly starting external actions and being divers and unsorted, with nowadays many external actions being needed by the users, either said users must scroll a lot (in case of many external actions being offered), or said users just get a limited number of possibilities via the prior art portal. This is user-friendly insufficiently.

According to the invention, said menu-items 110,120,130,140,150 respectively are each linked to sub-menu-items 111-115,121-127,131-139,141-146,151-155 respectively, with server 7 comprising generating module 76 for generating, in response to a first menu-item code (defining menu-item 110), sub-menu-item signals for displaying sub-menu-items 111-115 of first menu-item 110 on said display, and for generating, in response to a second menu-item code (defining menu-item 120), sub-menu-item signals for displaying sub-menu-items 121-127 of second menu-item 120 on said display. This increases the user's overview a lot. In addition, with at least most (preferably all) of sub-menu-items 111-115 of first menu-item 110 being personalized, and with at least most (preferably all) of said sub-menu-items 121-127 of said second menu-item 120 being non-personalized, the user is guided through the menu dependently upon user's needs, and gets a well-sorted overview. As a result, the user-friendlyness is increased much.

Menu-item 110 for example offers personalized services and is called "my services", with sub-menu-item 111 corresponding with a user's personal page and being named "my page" and allowing access to this page, with sub-menu-item 112 corresponding with a first service and being named "link to CP A" and allowing access to this service, with sub-menu-item 113 corresponding with a second service and being named "link to CP B" and allowing access to this service, with sub-menu-item 114 corresponding with details and being named "details" and allowing access to the details of the personalized services, and with sub-menu-item 115 corresponding with unsubscriptions and being named "unsubscribe" and allowing access to unsubscription possibilities of personalized services. Both lastmentioned accesses to services (to details and to unsubscription possibilities) may involve access to a direct service of a service provider coupled to coupling 61 or 62 (like the other services mentioned before) but may also involve access (possibly together with manipulation) to information stored in server 7.

Menu-item 120 for example offers non-personalized services and is called "all services", with sub-menu-item 121 corresponding with newsflash info and being named "news-weather-sports" and allowing access to this service, with sub-menu-item 122 corresponding with financial info and being named "finance" and allowing access to this service, with sub-menu-item 123 corresponding with travelling info and being named "travel" and allowing access to this service, with sub-menu-item 124 corresponding with shopping info and being named "shopping" and allowing access to this service, with sub-menu-item 125 corresponding with games and being named "fun-games" and allowing access to this service, with sub-menu-item 126 corresponding with communication info and being named "communication" and allowing access to this service, and with sub-menu-item 127 corresponding with the use of this menu abroad and being named "i-mode abroad" and allowing the use of this portal from abroad.

For getting the abovementioned accesses to services, said user must generate a further activation signal comprising a sub-menu-item code defining a sub-menu-item, again by using the mobile phone's keys, which further activation signal is sent to receiving module 74, which informs processor/memory 79. In response, processor/memory 79 controls addressing module 77 in such a way that an address of a service provider is generated for addressing this service provider for coupling said mobile phone 1 to said service provider via switch 6 and coupling 61 or 62.

Menu-item 130 for example offers time-dependent information like timely updatable news and is called "i-magazine", with sub-menu-item 131 corresponding with news websites and being named "new sites" and allowing access to these sites, with sub-menu-item 132 corresponding with updated websites and being named "updated sites" and allowing access to these sites, with sub-menu-item 133 corresponding with operator's offers and being named "operator friendly info" and allowing access to this service, etc.

Although sub-menu-items 131 and 132 give access to other sites, it should be noted that, the time-dependent information which possibly gives access to other services is stored itself in processor/memory 79 in server 7. For getting the time-dependent information, said user must generate a further activation signal comprising a sub-menu-item code defining a sub-menu-item, again by using the mobile phone's keys, which further activation signal is sent to receiving module 74, which informs processor/memory 79. In response, processor/memory 79 controls supplying module 78 in such a way that said time-dependent information (like for example new/amended URLs) is supplied to mobile phone 1. Then, said user has the option of for example leaving the portal and visiting these new/amended URLs etc., as described before, for example via addressing module 77.

Menu-item 140 for example offers adjustable options and is called "options", with sub-menu-item 141 corresponding with the user's mail address and being named "mail address" and allowing change of mail address, with sub-menu-item 142 corresponding with pin-code info and being named "i-mode pin" and allowing change of pin-code, with sub-menu-item 143 corresponding with a menu language and being named "language" and allowing adjustment of menu language, and with sub-menu-item 144 corresponding with subscriptions and being named "subscription order" and allowing access to subscription possibilities to personalized services, etc.

For getting access to this adjusting of user-dependent information, said user must generate a further activation signal comprising a sub-menu-item code defining a sub-menu-item, again by using the mobile phone's keys, which further activation signal is sent to receiving module 74, which informs processor/memory 79. In response, processor/memory 79 controls adjusting module 73 in such a way that, in response to a receival of an adjustment signal originating from said user at mobile phone 1 (who has used the mobile phone's keys) and arriving via switch 6 and interface 71, adjustment of user-dependent information stored in said server is now allowed.

In case of additional authorisation and/or authentication being required, further unit 72 may be involved for making challenge signed responses, checking passwords, codewords etc.

Menu-item 150 for example offers help and is called "help", with sub-menu-items 151 etc. corresponding with different kinds of help.

Each possibility described before can be combined with each other possibility. Each module, shown in the form of a block or not shown, can be 100% hardware, 100% software or a mixture of both. Each block shown or not shown can be integrated with each other block shown and/or not shown per server 7, but also per combination of server 7 and switch 6. In addition to processor/memory 79, each block can have a further processor and/or further memory not shown for efficiency purposes. The bus 80,81 may be replaced by separate connections, thereby for example introducing multiplexers and demultiplexers. Interface 71 may comprise a hardware switch, duplexer, splitter etc. but may also comprise just software or a combination of both. For example (parts of) the software (are) is thereby for example written in cHTML.

Mobile phone 1 is just an example of a mobile terminal, but other (mobile or non-mobile) terminals are not to be excluded, like digital assistants, cordless phones etc. In other words, said terminal will generally be portable and have a small(er) sized display compared to ordinary personal computers. Mobile phones nowadays also comprise menus and submenus, with for example either one menu-item of one sub-menu-item in this mobile phone being linked to the menu and its sub-menus in the portal according to the invention.

The fact that the portal according to the invention comprises the menu and its submenus does not exclude that there can be different portal signals (different portal pages) not showing this menu but for example just showing a link to this menu (via an other portal page). However, usually all menu-items and all sub-menu-items are stored in the server according to the invention. A menu in general gives an overview of menu-items which each give access to sub-menu-items. This does not exclude that further information is shown, in other words the portal signal comprising the menu-items may comprise further information.

According to the invention, the portal comprises a menu having menu-items, with at least two menu-items each being linked (in the same server) to sub-menu-items, one of said menu-items corresponding with personalized info, and the other with non-personalized info. However, further distinguishments can be found in this invention: for example the first, second and third menu-items deal with a user finally leaving the portal (via activating sub-menu-items or subsub-menu-items of these menu-items, not via activating menu-items in the main menu, which is a yet further distinguishment), and the fourth menu-item deal with adjusting user-dependent information stored in said server, in which case said user will not leave the portal.

So, different features can be found in this invention, like for example
- the offering of an internet portal comprising a menu (100) comprising menu-items (110,120,130,140,150),
- to a (mobile or non-mobile) terminal (1),
- a transmitting module (75) for transmitting a portal signal to said terminal,
- which portal signal comprises menu-item signals each for displaying at least a part of a menu-item on a display of said terminal,
- with said portal signal comprising said menu-item signals being stored in said server,
- a receiving module (74) for receiving an activation signal from said terminal for activating a menu-item,
- which activation signal comprises a menu-item code defining a menu-item,
- wherein at least some of said menu-items each are linked to at least two sub-menu-items (111-115,121-127,131-139,141-146,151-155),
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display,
- with at least most of said sub-menu-items (111-115) of said first menu-item (110) being personalized,
- with at least most of said sub-menu-items (121-127) of said second menu-item (120) being non-personalized,
- an addressing module (77) for, in response to a receival from said terminal of a further activation signal comprising a sub-menu-item code defining a sub-menu-item, addressing a service provider for coupling said terminal to said service provider,
- a supplying module (78) for, in response to a receival from said terminal of a further activation signal comprising a sub-menu-item code defining a sub-menu-item of a third menu-item (130), supplying time-dependent information stored in said server from said server to said terminal,
- an adjusting module (73) for, in response to a receival from said terminal of a further activation signal comprising a sub-menu-item code defining a sub-menu-item of a fourth menu-item (140), allowing adjustment of user-dependent information stored in said server in dependence of a receival of an adjustment signal originating from said terminal, and/or
- five menu-items offering time-dependent information (130), personalized services (110), non-personalized services (120), adjustment of user-dependent information (140) and help (150), in this particular order on said display.

In view of the above, it will be clear that further servers, further access providers, further methods, further processor program products, further (mobile or non-mobile) terminals and/or further portal signals can be defined using one or more of the above-described features and/or using further features disclosed in the introduction and/or in the description of the drawings, without departing from the scope of this invention.

## Claims

1. Server (7) for offering an internet portal comprising a menu (100) comprising menu-items (110,120,130,140,150) to a mobile terminal (1) and comprising
- a transmitting module (75) for transmitting a portal signal to said terminal, which portal signal comprises menu-item signals each for displaying at least a part of a menu-item on a display of said terminal, with said portal signal comprising said menu-item signals being stored in said server, and
- a receiving module (74) for receiving an activation signal from said terminal for activating a menu-item, which activation signal comprises a menu-item code defining a menu-item,
wherein at least some of said menu-items each are linked to at least two sub-menu-items (111-115,121-127,131-139,141-146,151-155), with said server comprising
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items (111-115) of said first menu-item (110) being personalized, and with at least most of said sub-menu-items (121-127) of said second menu-item (120) being non-personalized.

2. Server according to claim 1, wherein said server comprises
- an addressing module (77) for, in response to a receival from said terminal of a further activation signal comprising a sub-menu-item code defining a sub-menu-item, addressing a service provider for coupling said terminal to said service provider.

3. Server according to claim 1 or 2, wherein said server comprises
- a supplying module (78) for, in response to a receival from said terminal of a further activation signal comprising a sub-menu-item code defining a sub-menu-item of a third menu-item (130), supplying time-dependent information stored in said server from said server to said terminal.

4. Server according to claim 1, 2 or 3, wherein said server comprises
- an adjusting module (73) for, in response to a receival from said terminal of a further activation signal comprising a sub-menu-item code defining a sub-menu-item of a fourth menu-item (140), allowing adjustment of user-dependent information stored in said server in dependence of a receival of an adjustment signal originating from said terminal.

5. Server according to claim 1, 2, 3 or 4, wherein five menu-items offer time-dependent information (130), personalized services (110), non-personalized services (120), adjustment of user-dependent information (140) and help (150), in this particular order on said display.

6. Access provider (5) comprising a network-unit (6) coupled to a server (7) for offering an internet portal comprising a menu (100) comprising menu-items (110,120,130,140,150) to a mobile terminal (1) and comprising
- a transmitting module (75) for transmitting a portal signal to said terminal via said network-unit, which portal signal comprises menu-item signals each for displaying at least a part of a menu-item on a display of said terminal, with said portal signal comprising said menu-item signals being stored in said server, and
- a receiving module (74) for receiving an activation signal from said terminal via said network-unit for activating a menu-item, which activation signal comprises a menu-item code defining a menu-item,
wherein at least some of said menu-items each are linked to at least two sub-menu-items (111-115,121-127,131-139,141-146,151-155), with said server comprising
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items (111-115) of said first menu-item (110) being personalized, and with at least most of said sub-menu-items (121-127) of said second menu-item (120) being non-personalized.

7. Access provider according to claim 6, wherein said access provider comprises
- an addressing module (77) for, in response to a receival from said terminal via said network-unit of a further activation signal comprising a sub-menu-item code defining a sub-menu-item, addressing a service provider for coupling said terminal to said service provider via said network-unit.

8. Access provider according to claim 6 or 7, wherein said access provider comprises
- a supplying module (78) for, in response to a receival from said terminal of a further activation signal comprising a sub-menu-item code defining a sub-menu-item of a third menu-item (130), supplying time-dependent information stored in said server from said server to said terminal via said network-unit.

9. Access provider according to claim 6, 7 or 8, wherein said access provider comprises
- an adjusting module (73) for, in response to a receival from said terminal via said network-unit of a further activation signal comprising a sub-menu-item code defining a sub-menu-item of a fourth menu-item (140), allowing adjustment of user-dependent information stored in said server in dependence of a receival of an adjustment signal originating from said terminal via said network-unit.

10. Access provider according to claim 6, 7 or 8, wherein five menu-items offer time-dependent information (130), personalized services (110), non-personalized services (120), adjustment of user-dependent information (140) and help (150), in this particular order on said display.

11. Method for offering an internet portal comprising a menu comprising menu-items to a mobile terminal and comprising the steps of
- transmitting a portal signal to said terminal, which portal signal comprises menu-item signals each for displaying at least a part of a menu-item on a display of said terminal, with said portal signal comprising said menu-item signals being stored in a server, and
- receiving an activation signal from said terminal for activating a menu-item, which activation signal comprises a menu-item code defining a menu-item,
wherein at least some of said menu-items each are linked to at least two sub-menu-items, with said method comprising the step of
- generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items of said first menu-item being personalized, and with at least most of said sub-menu-items of said second menu-item being non-personalized.

12. Processor program product to be run via a server for offering an internet portal comprising a menu comprising menu-items to a mobile terminal and comprising
- a transmitting function for transmitting a portal signal to said terminal, which portal signal comprises menu-item signals each for displaying at least a part of a menu-item on a display of said terminal, with said portal signal comprising said menu-item signals being stored in said server, and
- a receiving function for receiving an activation signal from said terminal for activating a menu-item, which activation signal comprises a menu-item code defining a menu-item,
wherein at least some of said menu-items each are linked to at least two sub-menu-items, with said processor program product comprising
- a generating function for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items of said first menu-item being personalized, and with at least most of said sub-menu-items of said second menu-item being non-personalized.

13. Mobile terminal (1) for use in combination with a server (7) for offering an internet portal comprising a menu (100) comprising menu-items (110,120,130,140,150) to said mobile terminal (1) and comprising
- a transmitting module (75) for transmitting a portal signal to said terminal, which portal signal comprises menu-item signals each for displaying at least a part of a menu-item on a display of said terminal, with said portal signal comprising said menu-item signals being stored in said server, and
- a receiving module (74) for receiving an activation signal from said terminal for activating a menu-item, which activation signal comprises a menu-item code defining a menu-item,
wherein at least some of said menu-items each are linked to at least two sub-menu-items (111-115,121-127,131-139,141-146,151-155), with said server comprising
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items (111-115) of said first menu-item (110) being personalized, and with at least most of said sub-menu-items (121-127) of said second menu-item (120) being non-personalized.

14. Portal signal for offering an internet portal comprising a menu (100) comprising menu-items (110,120,130,140,150) via a server (7) comprising
- a transmitting module (75) for transmitting a portal signal to a mobile terminal via said network-unit, which portal signal comprises menu-item signals each for displaying at least a part of a menu-item on a display of said terminal, with said portal signal comprising said menu-item signals being stored in said server, and
- a receiving module (74) for receiving an activation signal from said terminal via said network-unit for activating a menu-item, which activation signal comprises a menu-item code defining a menu-item,
wherein at least some of said menu-items each are linked to at least two sub-menu-items (111-115,121-127,131-139,141-146,151-155), with said server comprising
- a generating module (76) for generating, in response to a first menu-item code, sub-menu-item signals each for displaying at least a part of a sub-menu-item of a first menu-item on said display, and for generating, in response to a second menu-item code, sub-menu-item signals each for displaying at least a part of a sub-menu-item of a second menu-item on said display, with at least most of said sub-menu-items (111-115) of said first menu-item (110) being personalized, and with at least most of said sub-menu-items (121-127) of said second menu-item (120) being non-personalized.
